# EUROPEAN PATENT SPECIFICATION

(11) **EP 3 445 709 B1**
(45) Date of publication and mention of the grant of the patent: **19.05.2021**
(21) Application number: 16899677.5
(22) Date of filing: 02.09.2016
(51) Int. Cl.: B82B 3/00, B82Y 30/00, B82Y 40/00, B22F 9/14, B22F 1/00

(54) **APPARATUS FOR MAKING NANOPARTICLES AND NANOPARTICLE SUSPENSIONS**
VORRICHTUNG ZUR HERSTELLUNG VON NANOPARTIKELN UND NANOPARTIKELSUSPENSIONEN
APPAREIL DE FABRICATION DE NANOPARTICULES ET SUSPENSIONS DE NANOPARTICULES

(30) Priority: 20.04.2016 US 201662325405 P
(43) Date of publication of application: 27.02.2019
(73) Proprietor: HRL Laboratories, LLC, Malibu, CA 90265-4797 (US)
(72) Inventor: SCHUBERT, Randall, C., Santa Monica, CA 90402 (US); SCHAEDLER, Tobias, A., Oak Park, CA 91377 (US); MARTIN, John, H., Ventura, CA 93003 (US)
(74) Representative: Grünecker Patent- und Rechtsanwälte PartG mbB
(86) International application number: PCT/US2016/050256
(87) International publication number: WO 2017/184194

(56) References cited:
- EP-A2- 2 269 949
- EP-A2- 2 269 949
- CN-A- 103 447 543
- KR-B1- 101 410 738
- US-A- 3 830 603
- US-A1- 2009 230 364
- US-A1- 2015 135 898
- KOTOV, YU A.: "Electric explosion of wires as a method for preparation of nanopowders", Journal of Nanoparticle Research, vol. 5, no. 5-6, 2003, pages 539-550, XP055567085,
- NAZARENKO, 0.: "Nanopowders produced by electrical explosion of wires", Proceedings of European Congress of Chemical Engineering (ECCE-6, 16 September 2007 (2007-09-16), pages 1-10, XP055433351, Copenhagen

## Description

### FIELD

The present disclosure relates generally to nanoparticles and, more specifically, the formation of nanoparticles.

### BACKGROUND

Nanoparticles exist in a variety of forms, including nanoparticles assembled on the surface of microparticles and nanoshells formed by coating nanoparticles on hollow microspheres. Additionally, nanoparticles are useful in a variety of applications, such as in coatings for combustion engines and exhaust systems or to activate sintering of bulk metallic parts. Nanoparticles are also useful in a variety of biological and medical applications.

Nanoparticles may be produced in a variety of methods, such as wire explosion, dry powder separation, and laser ablation. Wire explosion is a related art method that includes an instant capacitive discharge of a current through an electrically conductive wire, which explodes the wire to form the nanoparticles. However, in related art wire explosion methods, the wire is exploded in a nonflammable solvent, such as water, which reacts substantially with the nanoparticles upon their formation. This contamination from the reaction with the solvent reduces the quality and usefulness of the nanoparticles formed by this method. Similarly, related art femtosecond laser ablation methods are performed in a solvent, which results in contamination of the nanoparticles. Additionally, related art filtration methods, such as using air separators to filter particles by size, require the handling of dry powders, which presents a safety risk and a risk of contamination.

Many related art wire explosion methods also result in substantial downtime between wire explosion operations (i.e., a large off fraction of the duty cycle). For instance, some related art wire explosion methods include a limited number of discrete wire segments that are exploded successively in a stepwise manner. Furthermore, some related art wire explosion methods leave one end of the wire unconstrained during the explosion operation. Leaving one end of the wire unconstrained during explosion of the wire may cause reliability issues. For instance, nanoparticle size may vary between different wire explosion operations due to, for instance, variances in the length of the wire segment and/or variances in the tension applied to the wire segment during the wire explosion operation.

CN 103447543A describes a device for preparing nanocrystalline metal powder device with continuous fibers via electric explosion. The device is characterized in that an electric explosion chamber is provided with an air inlet valve and an air outlet valve, an electric explosion device is arranged in the electric explosion chamber, an electric motor drives a wheel disc to rotate, a metal wire is fixed on the wheel disc by a lever pressing and lifting mechanism and is continuously fed by a wire feeding mechanism, the two poles of an energy-storage capacitor are connected with a high pressure generator, a lever pressing plate and a lever lifting plate are arranged on a supporting plate, a pressing lever is connected with the wheel disc through a pressing lever rotating shaft and can rotate around the pressing lever rotating shaft, a scroll, a buffering spring piece and a godet wheel are all arranged on the supporting plate, and a V-shaped groove is arranged on the godet wheel, so that the metal wire can enter into a V-shaped gap with the bottom being arc-shaped on the wheel disc in the feeding process.

US3830603 A relates to producing small particles of metal, such as those used in making powder metal compacts, by feeding the end of a metal wire or rod against the edge of a rotating disc and causing a direct electrical current to flow through the wire and disc.

EP2269949A2 describes an apparatus for manufacturing liquid material containing nano-powder metal, wherein the time for condensation after evaporating a metal wire through electric explosion is shortened so that the metal particle can have finer size and the lifetime of electrodes is lengthened.

### SUMMARY

The present disclosure is directed to various embodiments of a wire explosion assembly configured to form nanoparticles by exploding at least a segment of an electrically conductive wire. The wire explosion assembly includes a spool supporting the electrically conductive wire, a vessel defining a wire explosion chamber, means in the wire explosion chamber for pulling the electrically conductive wire off of the spool and applying tension on the segment of the electrically conductive wire, and a power source for delivering an electrical current to the segment of the electrically conductive wire. The electrical current is configured to explode the segment of the electrically conductive wire into the nanoparticles. The means for pulling and applying tension on the segment of the electrically conductive wire may include a wire clamping assembly rotatably housed in the wire explosion chamber. The wire clamping assembly may include a winding and tensioning member, at least first and second clamp assemblies coupled to the winding and tensioning member, and a wire guide coupled to the winding and tensioning member between the at least first and second clamp assemblies. The at least first and second clamp assemblies are each configured to move between a clamped position and a disengaged position. Rotation of the wire clamping assembly is configured to pull the segment of the electrically conductive wire into the wire explosion chamber and wind the segment of the electrically conductive wire around at least a portion of winding and tensioning member to apply the tension to the segment of the electrically conductive wire. When the at least first and second clamp assemblies are in the clamped position, the segment of the electrically conductive wire extends between the wire guide and one of the at least first and second clamp assemblies.The wire explosion assembly may also include a first electrical wire coupled to the first clamp assembly, a second electrical wire coupled to the second clamp assembly, and a third electrical wire coupled to the wire guide. The power source is coupled to the first and second electrical wires and the power source is configured to alternately deliver the current through the first and second clamp assemblies to the segment of the electrically conductive wire to explode the segment of the electrically conductive wire into the nanoparticles. The first and second electrical wires may each have a first polarity and the third electrical wire may have a second polarity opposite the first polarity. The wire explosion assembly may also include a motor coupled to the wire clamping assembly that is configured to rotate the wire clamping assembly in the wire explosion chamber.The vessel may include an inwardly-facing cam surface having at least one lobe and the first and second clamp assemblies may each include a roller engaging the cam surface. The engagement between the rollers and the at least one lobe on the cam surface of the vessel is configured to alternately move the first and second clamp assemblies into the disengaged position. The wire explosion assembly may include an inlet opening defined in the vessel and a wire feed guide housed in the wire explosion chamber. The inlet opening is configured to receive the electrically conductive wire extending into the wire explosion chamber. The wire feed guide is configured to align the electrically conductive wire with the wire clamping assembly. The at least one lobe on the inwardly-facing cam surface may be positioned proximate to the inlet opening and the wire feed guide. During the rotation of the wire clamping assembly, the first and second clamping assemblies may engage the at least one lobe before reaching the inlet opening. Each of the first and second clamp assemblies may also include a resilient member configured to bias the first and second clamp assemblies into the clamped position. The wire explosion assembly may include first and second wire guides coupled to the winding and tensioning member and located between the first and second clamp assemblies. The winding and tensioning member may include an electrically non-conductive material.

The present disclosure is also directed to various embodiments of a system configured to form a nanoparticle suspension. In one embodiment, the system includes a wire explosion assembly configured to form nanoparticles by exploding at least a segment of an electrically conductive wire and a gas flow system configured to introduce a first processing gas into a wire explosion chamber. The wire explosion assembly may include a spool supporting the electrically conductive wire, a vessel defining the wire explosion chamber, means in the wire explosion chamber for pulling the electrically conductive wire off of the spool and applying tension on the segment of the electrically conductive wire, and a power source for delivering an electrical current to the segment of the electrically conductive wire. The electrical current is configured to explode the segment of the electrically conductive wire into the nanoparticles. The first processing gas may be any suitable gas or combination or gases, such as oxygen, nitrogen, and/or argon. The system may include a liquid in the wire explosion chamber, and the means for pulling and applying tension on the segment of the electrically conductive wire may be submerged in the liquid such that the nanoparticles are formed in the liquid. The system may also include a bubbler system coupled to the wire explosion assembly that is configured to introduce a solvent to the nanoparticles to form the nanoparticle suspension. The system may also include a post-processing apparatus positioned between the wire explosion assembly and the bubbler system. The post-processing apparatus may be configured to introduce a second processing gas different than the first processing gas. The post-processing apparatus may be configured heat the nanoparticles, cool the nanoparticles, expose the nanoparticles to an electromagnetic field, expose the nanoparticles to radiation, increase a pressure on the nanoparticles, and/or decrease a pressure on the nanoparticles.

The present disclosure not part of the invention is directed to various methods of forming nanoparticles. In one embodiment, the method includes pulling a segment of an electrically conductive wire into a wire explosion chamber, applying a substantially constant tension to the segment of the electrically conductive wire, and delivering an electrical current to the segment of the electrically conductive wire while applying the substantially constant tension to the segment of the electrically conductive wire to form the nanoparticles.

This summary is provided to introduce a selection of features and concepts of embodiments of the present disclosure that are further described below in the detailed description. This summary is not intended to identify key or essential features of the claimed subject matter, nor is it intended to be used in limiting the scope of the claimed subject matter. One or more of the described features may be combined with one or more other described features to provide a workable device.

### BRIEF DESCRIPTION OF THE DRAWINGS

Embodiments of apparatuses for making nanoparticles and/or nanoparticle suspensions according to the present disclosure are described with reference to the following figures. The same reference numerals are used throughout the figures to reference like features and components. The figures are not necessarily drawn to scale.
FIG. 1 is a schematic view of a system for making nanoparticle suspensions including a wire explosion assembly according to one embodiment of the present disclosure;
FIGS. 2A and 2B are a side view and a cross-sectional view, respectively, of the embodiment of the wire explosion assembly illustrated in FIG. 1 including a rotatable wire clamping assembly; and
FIGS. 3A-3D are perspective views of the embodiment of the wire clamping assembly illustrated in FIG. 2A and 2B in four different angular positions during a wire explosion operation.

### DETAILED DESCRIPTION

The present disclosure is directed to various embodiments of an apparatus for forming nanoparticles and/or nanoparticle suspensions by a wire explosion technique. In one or more embodiments, the apparatus is configured to form uniform or substantially uniform nanoparticles. Additionally, in one or more embodiments, the apparatus is configured to form the nanoparticles and then directly introduce the nanoparticles into a desired solvent to produce a nanoparticle suspension. The direct introduction of the nanoparticles into the solvent is configured to form nanoparticle suspensions having a high degree of purity with minimal or no surface contamination. Furthermore, in one or more embodiments, the apparatus is configured to form nanoparticles in a continuous or substantially continuous manner with repeatability in the size and quality of the nanoparticles. Moreover, in one or more embodiments, the apparatus is configured to maintain the wire in constant or substantially constant tension throughout the wire explosion technique, which is configured to aid in the formation uniform or substantially uniform nanoparticles.

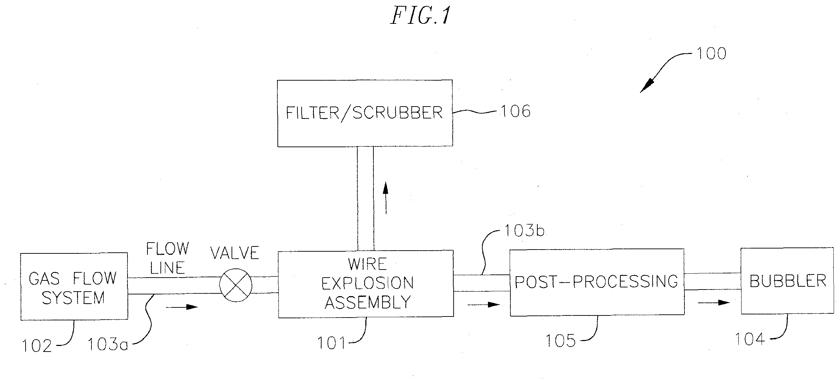

FIG. 1 depicts a schematic view of a system **100** configured to form nanoparticles and/or nanoparticle suspensions according to one embodiment of the present disclosure. In the illustrated embodiment, the system **100** includes a wire explosion assembly **101** configured to form nanoparticles, a gas flow system **102** configured to deliver one or more processing gases through at least one flow line **103a** to the wire explosion assembly **101,** and a bubbler **104** configured to introduce a solvent to the nanoparticles to form a nanoparticle suspension. In one or more embodiments, the system **100** may also include at least one post-processing apparatus **105** and/or a filter (e.g., a scrubber) apparatus **106** for removing and/or treating exhaust gases from the wire explosion assembly **101.**

The gas flow system **102** and the at least one flow line **103a** are configured to deliver the one or more process gases to the wire explosion assembly **101** with a flowrate suitable to maintain the proper stoichiometry of the nanoparticles. The process gas may be any suitable gas depending on the desired effect on the nanoparticles, such as, for instance, oxygen to form an oxide or nitrogen to form a nitride. Additionally, in one or more embodiments, the gas flow system **102** may be configured to deliver two or more gasses to the wire explosion assembly **101.** In one or more embodiments, the gas flow system **102** may be configured to deliver one or more inert gases, such as argon, to assist in moving the nanoparticles through the system **100.**

With continued reference to the embodiment illustrated in FIG. 1, the bubbler **104** is configured to introduce a solvent to the nanoparticles and to produce bubbles to suspend the nanoparticles. In one or more embodiments, the bubbler **104** is air and moisture tight. The bubbler **104** may be configured to introduce the solvent with or without exposure to the atmosphere. In one or more embodiments, the system **100** may include two or more bubblers **104** arranged in series or parallel to trap a greater number of nanoparticles in the bubbles produced by the bubbler **104** and/or to control the gas pressure leaving the flow lines. The bubbler **104** may be any suitable type of bubbler, such as, for instance, a relatively simple bubbler including a tube submerged in a volume of solvent or a relatively more complex bubbler including a diffuser configured to generate smaller bubbles and thereby suspend (i.e., trap) a greater number of nanoparticles. In one or more embodiments, the bubbler **104** may be configured to produce a more complicated flow pattern to increase nanoparticle trapping, such as, for instance, by cascading the solvent and/or inducing ultrasonic agitation of the solvent.

Still referring to the embodiment illustrated in FIG. 1, the post-processing apparatus **105** defines at least one post-processing chamber that may be used to introduce one or more additional processing gases into the nanoparticles and/or to expose the nanoparticles to one or more conditions prior to sending the nanoparticles to the bubbler **104** for the production of the nanoparticle suspension. Any suitable processing gases, conditions, or combinations thereof may be performed on the nanoparticles by the post-processing apparatus **105** depending on the desired characteristics and properties of the nanoparticles and the intended application of the nanoparticles. In one embodiment in which the post-processing apparatus **105** is configured to introduce a new processing gas to the nanoparticles (e.g., a processing gas different than the processing gas introduced into the wire explosion assembly **101** by the gas flow system **102**), the post-processing apparatus **105** may be configured to monitor and control the back pressure from the bubbler **104.** Additionally, in one or more embodiments, the post-processing apparatus **105** may be configured to shut off the flow of nanoparticles from the wire explosion assembly **101** (e.g., a flow line **103b** extending between the wire explosion assembly **101** and the post-processing apparatus **105** may include a valve) such that, for instance, the post-processing apparatus **105** may perform one or more tasks on the nanoparticles that require longer processing time than the flowrate of the nanoparticles from the wire explosion assembly **101** would permit. Following the post-processing of the nanoparticles in the post-processing apparatus **105,** the post-processing apparatus **105** may be configured to reinitiate the flow of nanoparticles from the wire explosion assembly **101** to the post-processing apparatus **105** and to permit the post-processed nanoparticles to flow into the bubbler **104.** In one or more embodiments, the post-processing apparatus **105** may be configured to introduce a catalyst prior to introducing one or more processing gases. The post-processing apparatus **105** may be configured to introduce the catalyst into the post-processing apparatus **105** and/or into the flow line **103b** leading into the post-processing apparatus **105.** The catalyst may be configured to remove and/or deactivate the processing gas introduced into the wire explosion assembly **101** such that the processing gas introduced in the post-processing apparatus **105** does not cross-react with the processing gas introduced in the wire explosion assembly **101.**

Additionally, in one or more embodiments, the post-processing apparatus **105** may be configured to heat the nanoparticles to an elevated temperature, cool the nanoparticles to a reduced temperature, expose the nanoparticles to an electromagnetic field and/or radiation, and/or to increase or decrease the pressure of the nanoparticles. The post-processing apparatus **105** may include a single post-processing chamber or multiple post-processing chambers. Accordingly, the tasks described above may be performed sequentially in a single post-processing chamber or sequentially in multiple post-processing chambers. Additionally, in one or more embodiments, the post-processing apparatus **105** may be configured to process the nanoparticles in a closed-loop manner prior to introducing the nanoparticles into the bubbler **104.** Furthermore, in one or more embodiments, the post-processing apparatus **105** may be under a vacuum (e.g., one or more of the post-processing chambers of the post-processing apparatus **105** may be a vacuum chamber) such that the post-processing apparatus **105** is configured to aid in drawing the nanoparticles from the wire explosion assembly **101.** In one or more alternate embodiments, the system **100** may be provided without the post-processing apparatus **105.**

Additionally, in one or more embodiments, the system **100** may be configured to form a dry nanoparticle powder rather than a nanoparticle suspension. In one or more embodiments, the system **100** may include one or more mechanisms configured to collect the dry nanoparticle powder, such as, for instance, a settling mechanism, a filtration mechanism, and/or a static attraction mechanism.

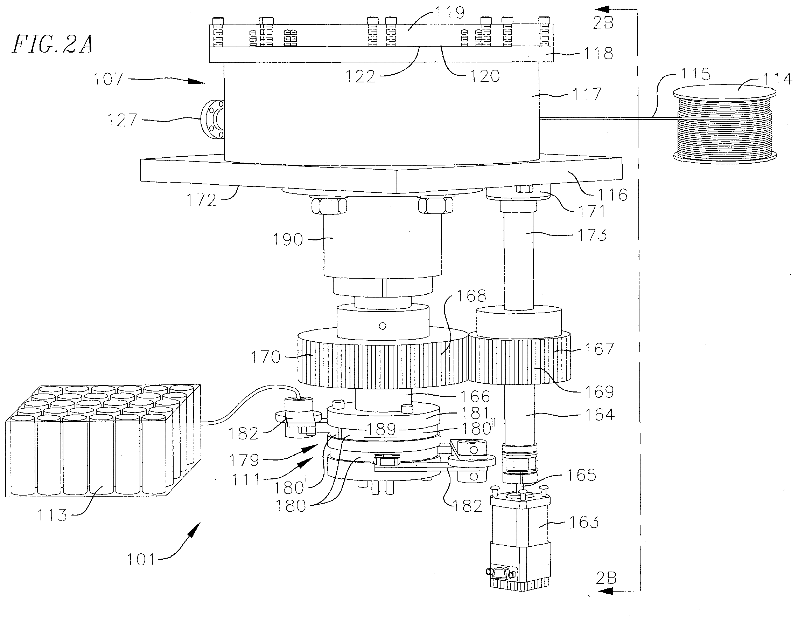

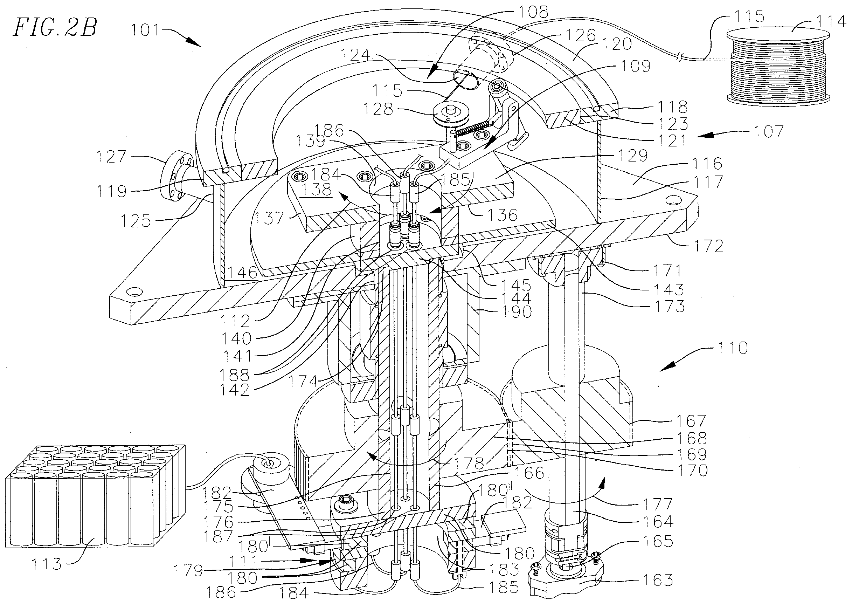

With reference now to FIGS. 2A-2B, the wire explosion assembly **101** according to one embodiment of the present disclosure includes a wire explosion vessel **107** defining a wire explosion chamber **108,** a wire clamping assembly **109** housed in the wire explosion chamber **108,** a rotary drive assembly **110** coupled to the wire clamping assembly **109,** and a brush and slip ring assembly **111** coupled to the rotary drive assembly **110.** The rotary drive assembly **110** is configured to rotate (arrow **112**) the wire clamping assembly **109** in the wire explosion chamber **108.** The wire explosion assembly **101** also includes a power source **113** (e.g., a capacitive discharge bank) electrically coupled to brush and slip ring assembly **111** and the wire clamping assembly **109.** The wire explosion assembly **101** also includes a spool **114** outside of the wire explosion chamber **108** around which electrically conductive wire **115** is wound. As described in more detail below, the rotation (arrow **112**) of the wire clamping assembly **109** is configured to draw at least a segment of the electrically conductive wire **115** from the spool **114** and into the wire explosion chamber **108.** The current supplied by the power source **113** to the wire clamping assembly **109** and a segment of the electrically conductive wire **115** secured to the wire clamping assembly **109** is configured to explode the segment of the electrically conductive wire **115** into a series of nanoparticles. In one or more embodiments, the power source **113** may include one or more capacitors having an electrical potential from approximately 1kV to approximately 1MV and a capacitance from approximately (about) 0.000001 Farad to approximately (about) 1000 Farads. The current supplied from the power source **113** to the segment of the electrically conductive wire **115** may be selected depending, for instance, on the characteristics of the electrically conductive wire **115** (e.g., the diameter, length, and/or material of the segment of the electrically conductive wire **115**). Additionally, in one or more embodiments, the discharge of the current through the segment of the electrically conductive wire **115** may occur from within approximately (about) 1 nanosecond ("ns") to approximately (about) 100 microseconds ("µs").

With continued reference to the embodiment illustrated in FIGS. 2A-2B, the wire explosion vessel **107** includes a base **116,** a sidewall **117** (e.g., a cylindrical sidewall) extending up from the base **116,** an upper lip or flange **118** (e.g., an annular lip or flange) connected to an upper end of the sidewall **117,** a cover **119** configured to be detachably coupled to an upper surface **120** of the upper lip **118** (e.g., by a plurality of fasteners), and a cam **121** coupled to a lower surface **122** of the cover **119.** In the illustrated embodiment, the cam **121** is configured to contact an inner surface **123** of the upper lip **118** when the cover **119** is coupled to the upper lip **118.** Together, the base **116,** the sidewall **117,** the upper lip **118,** and the cover **119** define the wire explosion chamber **108.** In the illustrated embodiment, the wire explosion chamber **108** also defines an inlet opening **124** and an outlet opening **125.** In the illustrated embodiment, the inlet and outlet openings **124, 125** are defined in the sidewall **117** of the wire explosion vessel **107.** Additionally, in the illustrated embodiment, the wire explosion assembly **101** includes an inlet conduit **126** extending to the inlet opening **124** and an outlet conduit **127** extending from the outlet opening **125.** The electrically conductive wire **115** is configured to extend from the spool **114** outside of the wire explosion chamber **108** into the wire explosion chamber **108** through the inlet conduit **126** and the inlet opening **124.** Additionally, in the illustrated embodiment, the wire explosion assembly **101** includes a wire feed guide **128** housed in the wire explosion chamber **108.** The electrically conductive wire **115** extends into the wire explosion chamber **108** through the inlet conduit **126** and the inlet opening **124** and around at least a portion of the wire feed guide **128.** The wire feed guide **128** is configured to properly align the electrically conductive wire **115** with the wire clamping assembly **109.**

With reference now to the embodiment illustrated in FIGS. 2A-3A the wire clamping assembly **109** includes a winding and tensioning member **129,** first and second clamp assemblies **130, 131** coupled to the winding and tensioning member **129,** and a plurality of wire guides **132, 133, 134, 135** (e.g., first, second, third, and fourth wire guides) coupled to the winding and tensioning member **129.** In the illustrated embodiment the winding and tensioning member **129** is a rectangular plate and the first and second clamp assemblies **130, 131** are located at diagonally opposed corners of the winding and tensioning member **129** and the wire guides **132, 133, 134, 135** are located at each of the four corners of the winding and tensioning member **129.** In one or more alternate embodiments, the winding and tensioning member **129** may have any other suitable shape and the first and second clamp assemblies **130, 131** and the wire guides **132, 133, 134, 135** may be arranged in any other suitable configuration on the winding and tensioning member **129.** Additionally, in one or more embodiments, the wire clamping assembly **109** may include any other suitable number of clamp assemblies **130, 131,** such as, for instance, three or more clamp assemblies, and any other suitable number of wire guides **132, 133, 134, 135** depending, for instance, on the shape and/or size of the winding and tensioning member **129.** Additionally, in the illustrated embodiment, the clamp assemblies **130, 131** and the wire guides **132, 133, 134, 135** are electrically conductive and the winding and tensioning member **129** is electrically non-conductive. In one or more embodiments, the winding and tensioning member **129** may be electrically conductive and the winding and tensioning member **129** may be electrically isolated from the clamp assemblies **130, 131** such as, for instance, by one or more rubber gaskets. Additionally, in the illustrated embodiment, two of the wire guides **132, 134** are aligned with the clamp assemblies **130, 131** and the other two wire guides **133, 135** are located between the clamp assemblies **130, 131.**

In the illustrated embodiment, the wire guides **132, 133, 134, 135** are rollers, although in one or more embodiments the wire guides **132, 133, 134, 135** may have any other suitable configuration. In the illustrated embodiment, the wire guides **132, 133, 134, 135** are coupled to a lower surface **136** of the winding and tensioning member **129,** although in one or more alternate embodiments, the wire guides **132, 133, 134, 135** may be coupled to any other portion of the winding and tensioning member **129,** such as, for instance, one or more of sidewalls **137** or an upper surface **138** of the winding and tensioning member **129.** Furthermore, in the illustrated embodiment, the wire guides **132, 133, 134, 135** are coupled to the winding and tensioning member **129** by fasteners extending down through the winding and tensioning member **129.**

Additionally, in the illustrated embodiment, the winding and tensioning member **129** defines a central opening **139.** In the illustrated embodiment, the wire clamping assembly **109** also includes a standoff **140** supporting the winding and tensioning member **129.** The standoff **140** spaces the winding and tensioning member **129** apart from the base **116** of the wire explosion vessel **107.** In the illustrated embodiment, the standoff **140** is a hollow member defining a central opening **141** aligned with the central opening **139** in the winding and tensioning member **129** and a central opening **142** defined in the base (or base plate) **116** of the wire explosion vessel **107.** In the illustrated embodiment, the wire clamping assembly **109** also includes a lower cover **143** and a junction plate **144.** The standoff **140** is supported on a portion of the lower cover **143** and extends upward from the lower cover **143.** A portion of the lower cover **143** is supported on the junction plate **144** such that a portion of the lower cover **143** is between the standoff **140** and the junction plate **144.** In the illustrated embodiment, the junction plate **144** is received in a recess **145** defined in the base plate **116** such that the lower cover **143** is flush or substantially flush with an upper surface **146** of the base plate **116.** The lower cover **143** extends radially outward from the standoff **140** and the junction plate **144** and covers the recess **145** and the central opening **142** in the base plate **116.** Accordingly, the lower cover **143** is configured to prevent nanoparticles formed in the wire explosion chamber **108** from escaping through the central opening **142** in the base plate **116.**

With continued reference to the embodiment illustrated in FIGS. 2A-3A, each of the clamp assemblies **130, 131** includes an L-shaped support bracket **147** coupled to the winding and tensioning member **129.** In the illustrated embodiment, each L-shaped bracket **147** includes a horizontal leg **148** coupled to the upper surface **138** of the winding and tensioning member **129** and a vertical leg **149** extending upward from the horizontal leg **148.** In the illustrated embodiment, the vertical leg **149** of the L-shaped support bracket **147** is bifurcated such that the vertical leg **149** defines a clevis **150.** Additionally, in the illustrated embodiment, each clamp assembly **130, 131** includes a lever **151** pivotally coupled to the clevis **150** defined in the vertical leg **149** of the support bracket **147** by a clevis pin **152.** In the illustrated embodiment, each clamp assembly **130, 131** also includes a roller **153** coupled to an upper end **154** of the lever **151** and a clamp **155** coupled to a lower end **156** of the lever **151.** In the illustrated embodiment, the clamp **155** is a pin-shaped member. In one or more embodiments, the clamps **155** of the clamp assemblies **130, 131** may have any other suitable shape. Although in the illustrated embodiment the roller **153** is cylindrical, in one or more alternate embodiments, the roller **153** may have any other suitable shape, such as, for instance, spherical. The rollers **153** of the clamp assemblies **130, 131** contact the cam 121, the significance of which is described below.

In the illustrated embodiment, each clamp assembly **130, 131** includes a horizontal pin **157** extending inward from the lever **151,** a vertical pin **158** extending upward from the horizontal leg **148,** and a resilient member **159** (e.g., a spring) extending between and coupled to the horizontal and vertical pins **157, 158.** The lever **151** and the clamp **155** coupled to the lever **151** are configured to move (e.g., pivot or rotate) (arrow **160**) between an engaged position and a disengaged position, the significance of which is described below. The resilient member **159** is configured to bias the lever **151** and the clamp **155** into the engaged position.

Still referring to the embodiment illustrated in FIGS. 2A-2B, the cam **121** is housed in the wire explosion chamber **108** and includes an inwardly-facing cam surface **161** (i.e., the cam surface **161** faces inward toward a longitudinal axis **L** of the wire explosion vessel **107**). Additionally, in the illustrated embodiment the cam **121** includes a lobe **162.** A portion of the cam surface **161** at the lobe **162** extends further inward toward the longitudinal axis **L** of the wire explosion vessel **107** than a remaining portion of the cam surface **161.** Additionally, in the illustrated embodiment, the portion of the cam surface **161** at the lobe **162** is canted (e.g., sloped or angled) inward toward the longitudinal axis **L** of the wire explosion vessel **107** and the remainder of the cam surface **161** is parallel or substantially parallel with the longitudinal axis **L** of the wire explosion vessel **107** (e.g., the remainder of the cam surface **161** is vertical or substantially vertical). In one or more alternate embodiments, the entire cam surface **161** may be parallel or substantially parallel with the longitudinal axis **L** of the wire explosion vessel **107** (e.g., the entire cam surface **161** may be vertical or substantially vertical). As described in more detail below, the cam surface **161** of the cam **121** is configured to move (e.g., pivot or rotate) (arrow **160**) the clamp assemblies **130, 131** between the engaged and disengaged positions.

With continued reference to the embodiment illustrated in FIGS. 2A-2B, the rotary drive assembly **110** includes a drive motor **163,** a drive shaft **164** coupled to an output shaft **165** of the drive motor **163,** and a transmission member **166** coupled to the drive shaft **164.** Additionally, in the illustrated embodiment, the rotary drive assembly **110** includes a drive gear **167** coupled to the drive shaft **164** and a transmission gear **168** coupled to the transmission member **166.** Teeth **169** on the drive gear **167** are engaged (e.g., meshed) with teeth **170** on the transmission gear **168.** Additionally, in the illustrated embodiment, the rotary drive assembly **110** includes a rotary bearing **171** coupled to a lower surface **172** of the base **116** of the wire explosion vessel **107.** An upper end **173** of the drive shaft **164** is rotatably received in the rotary bearing **171.**

In the illustrated embodiment, the transmission member **166** extends up into the central opening **142** of the base **116** of the wire explosion vessel **107** and an upper end **174** of the transmission member **166** is coupled to junction plate **144** of the wire clamping assembly **109.** In the illustrated embodiment, the transmission member **166** is a hollow member defining a central axial opening **175.** The central axial opening **175** extends from a lower end **176** to the upper end **174** of the transmission member **166.** When the drive motor **163** is actuated, the drive motor **163** rotates (arrow **177**) the drive shaft **164** and the drive gear **167.** Additionally, because the drive gear **167** is engaged with the transmission gear **168,** the rotation (arrow **177**) of the drive gear **167** causes the transmission gear **168** and the transmission member **166** to rotate (arrow **178**). The rotation (arrow **178**) of the transmission member **166** causes the wire clamping assembly **109** to rotate (arrow **112**) inside the wire explosion chamber **108.** The relative sizes of the drive gear **167** and the transmission gear **168** may be selected based on the desired gear ratio and the desired rotation rate of the wire clamping assembly **109** in the wire explosion chamber **108.**

Additionally, in the illustrated embodiment, the brush and slip ring assembly **111** is coupled to the lower end **176** of the transmission member **166.** In the illustrated embodiment, the brush and slip ring assembly **111** includes a slip ring drum **179** having a stack of slip rings **180** and a cap plate **181** on top of the stack of slip rings **180.** The brush and slip ring assembly **111** also includes a pair of brushes **182** (e.g., carbon brushes) contacting the slip rings **180.** In the illustrated embodiment, the slip ring drum **179** is hollow and defines a central opening **183.** Additionally, in the illustrated embodiment, the slip ring **180** that is contacted (e.g., engaged) by the brushes **182** is a split ring including two semi-annular components **180', 180",** the significance of which is described below.

In the illustrated embodiment, the wire explosion assembly **101** includes a series of electrical wires **184, 185, 186** coupled to the slip rings **180.** In the illustrated embodiment, the electrical wire **184** is coupled to the first semi-annular component **180'** of one of the slip rings **180** and the electrical wire **185** is coupled to the second semi-annular component **180"** of the slip ring **180.** The electrical wires **184, 185, 186** extend up through the central opening **183** of the slip ring drum **179,** through one or more openings **187** defined in the cap plate **181,** up through the central axial opening **175** of the transmission member **166,** through one or more openings **188** defined in the junction plate **144,** and up through the central openings **141, 139** in the standoff **140** and the winding and tensioning member **129,** respectively, of the wire clamping assembly **109.** Additionally, upper ends of the electrical wires **184, 185, 186** are coupled to the wire clamping assembly **109.** For instance, in the illustrated embodiment, the electrical wire **184** is coupled to the first clamp assembly **130,** the electrical wire **185** is coupled to the second clamp assembly **131,** and the electrical wire **186** is coupled to the wire guides **133, 135** that are located between the clamp assemblies **130, 131** (i.e., the electrical wire **186** is coupled to the wire guides **133, 135** that are not aligned with the clamp assemblies **130, 131**). Additionally, in the illustrated embodiment, the electrical wire **186** coupled to the wire guides **133, 135** has the opposite polarity as the electrical wires **185, 186** coupled to the clamp assemblies **130, 131.** For instance, in one or more embodiments, the electrical wires **184** and **185** may have a positive polarity (e.g., the electrical wires **184** and **185** may be anodes) and the electrical wire **186** may have a negative polarity (e.g., the electrical wire **186** may be a cathode). In one or more embodiments, the electrical wires **184** and **185** may have a negative polarity and the electrical wire **186** may have a positive polarity. Additionally, in the illustrated embodiment, the power source (supply) **113** (e.g., the capacitive discharge bank) is coupled to the brushes **182** of the brush and slip ring assembly **111.** The brush and slip ring assembly **111** is configured to permit current to be transmitted to the electrical wires **184, 185, 186** housed within the transmission member **166** while the transmission member **166** and the electrical wires **184, 185, 186** housed therein are rotating (arrow **178**). That is, as the slip ring drum **179,** the transmission member **166,** and the wire clamping assembly **109** rotate (arrows **178, 112**), the brushes **182** maintain contact with an outer surface **189** of the stack of slip rings **180** to transmit current through the slip rings **180** and to the electrical wires **184, 185, 186** coupled to the slip rings **180.**

Additionally, in the illustrated embodiment, the rotary drive assembly **110** includes a sealed rotary passthrough **190** coupled to the lower surface **172** of the base **116** of the wire explosion vessel **107.** The transmission member **166** and the electrical wires **184, 185, 186** housed in the transmission member **166** extend up through the sealed rotary passthrough **190.** The sealed rotary passthrough **190** is configured to create a hermetic seal to prevent or mitigate the risk of nanoparticles formed in the wire explosion chamber **108** from inadvertently escaping from the wire explosion chamber **108** through the central opening **142** in the base **116** of the wire explosion vessel **107.** The sealed rotary passthrough **190** may include any suitable type or kind of sealing mechanism, such as, for instance, a magnetic liquid sealing mechanism using a ferrofluid.

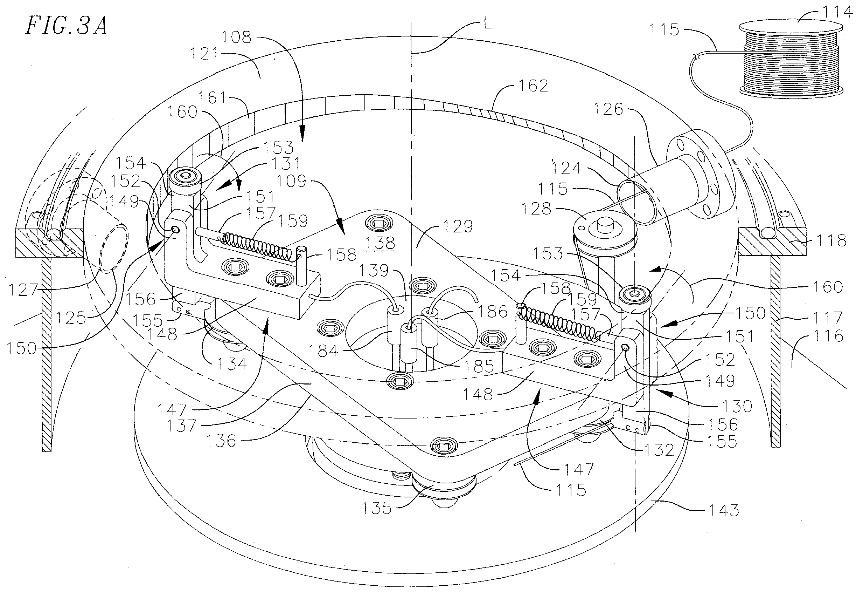

FIGS. 3A-3D illustrate the operation of the embodiment of the wire explosion assembly **101** illustrated in FIGS. 2A-2B to form nanoparticles. The cover **119** is omitted in FIGS. 3A-3D for clarity. In operation, the motor **163** is actuated to rotate (arrow **112**) the wire clamping assembly **109** in the wire explosion chamber **108.** As illustrated in FIG. 3A, when the wire clamping assembly **109** is in an initial position, the electrically conductive wire **115** extends into the wire explosion chamber **108** through the inlet conduit **126** and the inlet opening **124,** extends around a portion of the wire feed guide **128,** and is clamped between the clamp **155** of the first clamp assembly **130** and the first wire guide **132** on the winding and tensioning member **129** (i.e., the first clamp assembly **130** is in the clamped position such that the electrically conductive wire **115** is clamped (e.g., secured) between the clamp **155** of the first clamp assembly **130** and the first wire guide **132**).

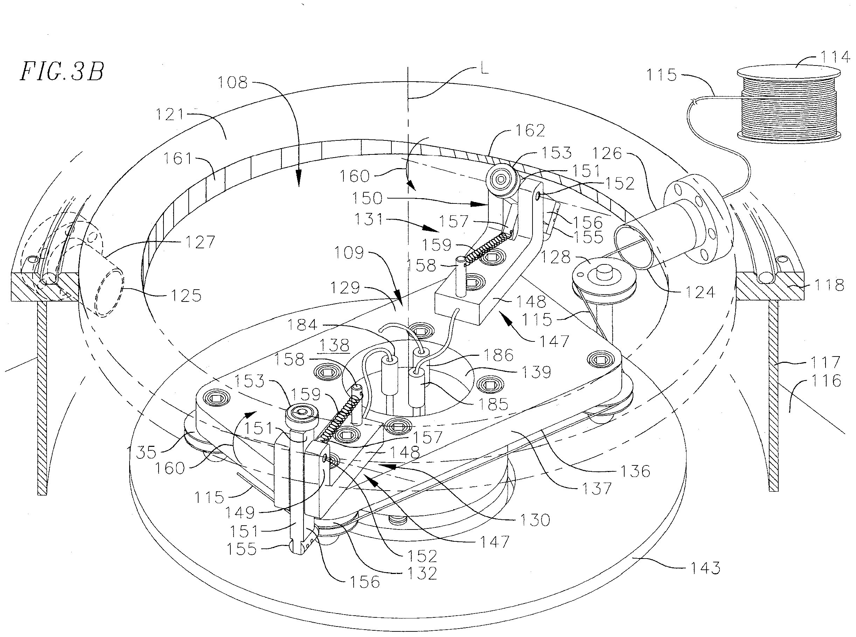

As illustrated in FIG. 3B, the rotation (arrow **112**) of the wire clamping assembly **109** causes an additional length of the electrically conductive wire **115** to be withdrawn from the spool **114** and to extend into the wire explosion chamber **108** (i.e., because the electrically conductive wire **115** is clamped between the first clamp assembly **130** and the first wire guide **132,** the rotation (arrow **112**) of the wire clamping assembly **109** draws more of the electrically conductive wire **115** into the wire explosion chamber **108**). When the wire clamping assembly **109** is in the angular position illustrated in FIG. 3B, the electrically conductive wire **115** extends from the first wire guide **132** at the first clamp assembly **130** to the second wire guide **133,** which is between the first and second clamp assemblies **130, 131,** such that the electrically conductive wire **115** is wound around a portion of the winding and tensioning member **129** (e.g., the electrically conductive wire **115** extends from the first wire guide **132** at the first clamp assembly **130** to the intermediate wire guide **133** between first and second clamp assemblies **130, 131**). Additionally, as illustrated in FIG. 3B, as the wire clamping assembly **109** is rotating (arrow **112**) inside the wire explosion chamber **108,** the rollers of the clamp assemblies **130, 131** engage (e.g., roll or slide) along the cam surface **161** of the cam **121.** When the wire clamping assembly **109** is in the angular position illustrated in FIG. 3B, the roller **153** of the second clamp assembly **131** engages the lobe **162** of the cam **121.** The engagement between the lobe **162** and the roller **153** of the second clamp assembly **131** causes the lever **151** and the clamp **155** coupled to the lower end **156** of the lever **151** to rotate (arrow **160**) into the disengaged position. When the lever **151** and the clamp **155** of the second clamp assembly **131** are in the disengaged position, the clamp **155** is spaced apart from the third wire guide **134** (i.e., the corresponding wire guide **134**) on the winding and tensioning member **129.** In the illustrated embodiment, the lobe **162** is positioned on the cam **121** such that as the wire clamping assembly **109** rotates (arrow **112**), the roller **153** on the second clamp assembly **131** contacts the lobe **162** on the cam **121** before reaching the inlet opening **124.** Accordingly, the second clamp assembly **131** is moved (arrow **160**) into the disengaged position before reaching the inlet opening **124,** which permits the second clamp assembly **131** to pass over the wire feed guide **128** as the wire clamping assembly **109** continues to rotate (arrow **112**).

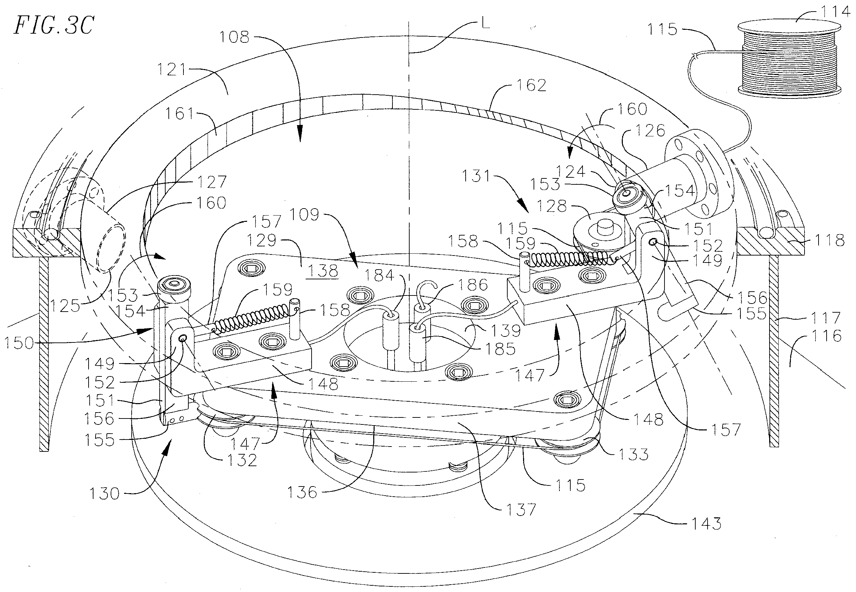

As illustrated in FIG. 3C, as the wire clamping assembly **109** continues to rotate (arrow **112**), the wire clamping assembly **109** continues to draw more of the electrically conductive wire **115** into the wire explosion chamber **108** and to wind the electrically conductive wire **115** around a greater portion of the winding and tensioning member **129.** When the wire clamping assembly **109** is in the angular position illustrated in FIG. 3C, the electrically conductive wire **115** extends from the first wire guide **132** at the first clamp assembly **130,** around the second wire guide **133** between the first and second clamp assemblies **130, 131,** and to the third wire guide **134** at the second clamp assembly **131.**

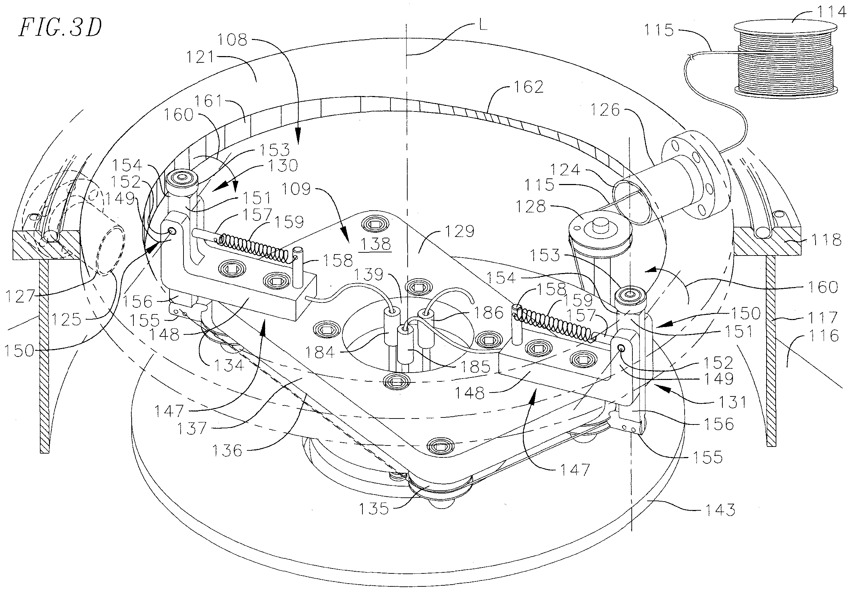

Additionally, as the wire clamping assembly **109** is rotated (arrow **112**) into the angular position illustrated in FIG. 3D, the roller **153** on the second clamp assembly **131** disengages the lobe **162** on the cam **121** (i.e., the roller **153** rotates past the lobe **162** on the cam **121**). Accordingly, the resilient member **159** (e.g., the spring) forces the second clamp assembly **131** to return to the clamped position.

When the second clamp assembly **131** is returned to the clamped position, as illustrated in FIG. 3D, a segment of the electrically conductive wire **115** extends between the first and third wire guides **132, 134** that are coupled to the winding and tensioning member **129** and aligned with the clamp assemblies **130, 131** (e.g., a segment of the electrically conductive wire **115** extends between the first wire guides **132** at the first clamp assembly **130** and the third wire guide **134** at the second clamp assembly **131**). Additionally, opposite ends the segment of wire **115** are engaged by the clamps **155** of the first and second clamp assemblies **130, 131.** When the wire clamping assembly **109** is in the position illustrated in FIG. 3D, the brush **182** connected to the power source **113** is in contact with the first semi-annular component **180'** of the slip ring **180,** but not the second semi-annular component **180"** of the slip ring **180** (see FIG. 2A). Accordingly, when the wire clamping assembly **109** is in the position illustrated in FIG. 3D, current flows from the power source **113** and through the electrical wire **184** coupled to the first semi-annular component **180'** of the slip ring **180.** Additionally, because the brush **182** is not in contact with the semi-annular component **180"** of the slip ring **180,** current does not flow through the electrical wire **185** coupled to the second semi-annular component **180"** of the slip ring **180.** Thus, when the second clamp assembly **131** is returned to the clamped position such that the first and second clamp assemblies **130, 131** are both in the clamped position, as illustrated in FIG. 3D, current flows through the electrical wire **184** coupled to the first clamp assembly **130,** through the first clamp assembly **130,** through the electrical wire **186** and the second wire guide **133** that is located between the clamp assemblies **130, 131,** and through the segment of the electrically conductive wire **115** extending between the first clamp assembly **130** and second wire guide **133** (e.g., the current flows to the segment of the electrically conductive wire **115** through the clamp **155** of the first clamp assembly **130** and the second wire guide **133,** which are in contact with opposite ends of the electrically conductive wire **115** segment). The current flowing through the segment of the electrically conductive wire **115** extending between the first clamp assembly **130** and the second wire guide **133** is configured to explode the segment of the electrically conductive wire **115.** The size and shape of the winding and tensioning member **129** and the positioning of the clamp assemblies **130, 131** and the wire guides **132-135** on the winding and tensioning member **129** may be selected depending on the desired length of the segment of the electrically conductive wire **115** that is exploded during each wire explosion operation. The portion or segment of the electrically conductive wire **115** between the second wire guide **133** and the second clamp assembly **131** is not exploded.

The explosion of the segment of the electrically conductive wire **115** between the first clamp assembly **130** and the second wire guide **133** forms a plurality of nanoparticles. In one or more embodiments, the nanoparticles formed by exploding the electrically conductive wire **115** may have a diameter from approximately (about) 5 nanometers ("nm") to approximately (about) 1000nm depending, for instance, on the processing conditions under which the electrically conductive wire **115** is exploded. Additionally, although in one or more embodiments the nanoparticles may be spherical or substantially spherical, in one or more embodiments, the nanoparticles may deviate from spherical in one or more dimensions by up to approximately (about) 10%. In one or more embodiments, the nanoparticles may have any suitable shape, such as, for instance, rod-like and/or an arbitrary shape. Additionally, in one or more embodiments, the composition of the nanoparticles may be the same or substantially the same as the composition of the electrically conductive wire **115** from which the nanoparticles were formed. In one or more embodiments, vaporization of lighter elements may occur during explosion of the electrically conductive wire **115** and therefore the composition of the nanoparticles may vary from the composition of the electrically conductive wire **115.** Additionally, the composition of the nanoparticles may vary depending on the type of processing gas introduced. For instance, the composition of the nanoparticles may vary from the composition of the electrically conductive wire **115** due to the absorption and/or other reaction with one or more elements in the processing gas. For instance, in one or more embodiments, the processing gas may include oxygen to form oxide nanoparticles and/or nitrogen to form nitride nanoparticles.

Additionally, as illustrated in FIG. 3D, following the explosion of the segment of the electrically conductive wire **115,** the wire clamping assembly **109** is in the same or substantially the same angular position as the wire clamping assembly **109** was when it was in the initial angular position illustrated in FIG. 3A, but with the positions of the first and second clamp assemblies **130, 131** swapped. Accordingly, the continued rotation (arrow **112**) of the wire clamping assembly **109** within the wire explosion chamber **108** is configured to explode additional segments of the electrically conductive wire **115** into nanoparticles in the same manner described above. Accordingly, the continued rotation (arrow **112**) of the wire clamping assembly **109** is configured to continuously or substantially continuously form nanoparticles by exploding successive segments of the electrically conductive wire **115.** As described above, one of the slip rings **180** is a split ring that includes two semi-annular components **180', 180"** and therefore the brush **182** connected to the power source **113** alternates between being in contact with the first semi-annular component **180'** and the second semi-annular component **180"** as the wire clamping assembly **109** rotates (arrow **112**). Accordingly, current alternately flows through the electrical wire **184** coupled to the first clamp assembly **130** and the electrical wire **185** coupled to the second clamp assembly **131** as the wire clamping assembly **109** rotates (arrow **112**). In this manner, the system **100** is configured to alternately explode a segment of the electrically conductive wire **115** extending between the first clamp assembly **130** and the second wire guide **133** and a segment of the electrically conductive wire **115** extending between the second clamp assembly **131** and the fourth wire guide **135.** Additionally, the continued rotation (arrow **112**) of the wire clamping assembly **109** is configured to apply a consistent or substantially consistent tension on the segment of the electrically conductive wire **115** exploded during each of the wire explosion processes, which is configured to aid in the formation uniform or substantially uniform nanoparticles (i.e., the nanoparticles formed during one wire explosion process using the wire explosion assembly **101** of the present disclosure will have the same or substantially the same characteristics, such as size and/or shape, as nanoparticles formed during a subsequent wire explosion process using the wire explosion assembly **101** of the present disclosure).

In the illustrated embodiment, the conductive wire **115** is redundantly clamped between the clamps **155** of the clamp assemblies **130, 131**. For instance, in the illustrated embodiment, the portion of the conductive wire **115** extending between one of the clamp assemblies **130** or **131** and one of the wire guide **133** or **135** is exploded during the wire explosion operation and the other portion of the conductive wire **115** extending between the wire guide **133** or **135** and the other clamp assembly **130** or **131** is not exploded during the wire explosion operation (e.g., only a portion of the segment of the conductive wire **115** extending between the two clamp assemblies **130, 131** is exploded during a single wire explosion operation). Accordingly, once a portion of the conductive wire **115** has been exploded into the nanoparticles, another portion of the conductive wire **115** remains clamped by one of the clamp assemblies **130, 131** (e.g., the end portion of the conductive wire **115** following a wire explosion operation remains secured by one of the clamp assemblies **130, 131**). In one or more embodiments, the wire clamping assembly **109** may contain any other suitable number of clamp assemblies **130, 131,** such as, for instance, three or more clamp assemblies.

While this invention has been described in detail with particular references to embodiments thereof, the embodiments described herein are not intended to be exhaustive or to limit the scope of the invention to the exact forms disclosed. Additionally, although relative terms such as "horizontal," "vertical," "upper," "lower," and similar terms have been used herein to describe a spatial relationship of one element to another, it is understood that these terms are intended to encompass different orientations of the various elements and components of the invention in addition to the orientation depicted in the figures. Additionally, as used herein, the term "substantially," "about," and similar terms are used as terms of approximation and not as terms of degree, and are intended to account for the inherent deviations in measured or calculated values that would be recognized by those of ordinary skill in the art. Furthermore, as used herein, when a component is referred to as being "on" or "coupled to" another component, it can be directly on or attached to the other component or intervening components may be present therebetween.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Additionally, the system and/or any other relevant devices or components according to embodiments of the present invention described herein may be implemented utilizing any suitable hardware, firmware (e.g. an application-specific integrated circuit), software, or a combination of software, firmware, and hardware.

## Claims

1. A wire explosion assembly (101) configured to form nanoparticles by exploding at least a segment of an electrically conductive wire (115), the wire explosion assembly comprising:
a spool (114) supporting the electrically conductive wire;
a vessel (107) defining a wire explosion chamber (108);
a wire clamping assembly (109) rotatably housed in the wire explosion chamber for pulling the electrically conductive wire off of the spool and applying constant tension on the segment of the electrically conductive wire;
a power source (113) for delivering an electrical current to the segment of the electrically conductive wire tensioned with a constant tension by the wire clamping assembly, the electrical current configured to explode the segment of the electrically conductive wire into the nanoparticles;
wherein the wire clamping assembly further comprises:
a winding and tensioning member (129);
at least a first clamp assembly (130) and a second clamp assembly (131) coupled to the winding and tensioning member; and
a wire guide (132; 135) coupled to the winding and tensioning member between the at least first and second clamp assemblies, the at least first and second clamp assemblies each configured to move between a clamped position and a disengaged position,
wherein rotation of the wire clamping assembly is configured to pull the segment of the electrically conductive wire into the wire explosion chamber and wind the segment of the electrically conductive wire around at least a portion of winding and tensioning member to apply the tension to the segment of the electrically conductive wire, and
wherein, when the at least first and second clamp assemblies are in the clamped position, the segment of the electrically conductive wire extends between the wire guide and one of the at least first and second clamp assemblies.

2. The wire explosion assembly of claim 1, further comprising:
a first electrical wire (184) coupled to the first clamp assembly;
a second electrical wire (185) coupled to the second clamp assembly; and
a third electrical wire (186) coupled to the wire guide,
wherein the power source is coupled to the first and second electrical wires, and
wherein the power source is configured to alternately deliver the current through the first and second clamp assemblies to the segment of the electrically conductive wire to explode the segment of the electrically conductive wire into the nanoparticles.

3. The wire explosion chamber of claim 2, wherein the first and second electrical wires each have a first polarity and the third electrical wire has a second polarity opposite the first polarity.

4. The wire explosion assembly of any of claims 1-3, further comprising a motor (163) coupled to the wire clamping assembly, the motor configured to rotate the wire clamping assembly in the wire explosion chamber.

5. The wire explosion assembly of any of claims 1-4, wherein:
the vessel comprises an inwardly-facing cam surface (161) having at least one lobe; and
the first and second clamp assemblies each further comprise a roller (153) engaging the cam surface, the engagement between the rollers and the at least one lobe on the cam surface of the vessel is configured to alternately move the first and second clamp assemblies into the disengaged position.

6. The wire explosion assembly of claim 5, further comprising:
an inlet opening (124) defined in the vessel, the inlet opening configured to receive the electrically conductive wire extending into the wire explosion chamber; and
a wire feed guide (128) housed in the wire explosion chamber, the wire feed guide configured to align the electrically conductive wire with the wire clamping assembly.

7. The wire explosion assembly of claim 6, wherein the at least one lobe on the inwardly-facing cam surface is positioned proximate to the inlet opening and the wire feed guide, and wherein during the rotation of the wire clamping assembly, the first and second clamping assemblies engage the at least one lobe before reaching the inlet opening.

8. The wire explosion assembly of any of claims 1-7, wherein each of the first and second clamp assemblies further comprises a resilient member (159) configured to bias a respective one of the first and second clamp assemblies into the clamped position.

9. The wire explosion assembly of any of claims 1-8, wherein the wire guide is a first wire guide (132), and wherein the wire clamping assembly further comprises a second wire guide (135) coupled to the winding and tensioning member, the second wire guide located between the first and second clamp assemblies and opposite the first wire guide.

10. The wire explosion assembly of any of claims 1-9, wherein the winding and tensioning member comprises an electrically non-conductive material.

11. A system configured to form a nanoparticle suspension, the system comprising:
the wire explosion assembly of claim 1; and
a gas flow system (102) configured to introduce a first processing gas into the wire explosion chamber.

12. The system of claim 11, wherein the first processing gas is selected from the group of gasses consisting of oxygen, nitrogen, and combinations thereof.

13. The system of claim 11 or claim 12, further comprising a liquid in the wire explosion chamber, and wherein the wire clamping assembly for pulling and applying tension on the segment of the electrically conductive wire is submerged in the liquid such that the nanoparticles are formed in the liquid.

14. The system of any one of claims 11, 12, or 13, further comprising a bubbler system (104) coupled to the wire explosion assembly and configured to introduce a solvent to the nanoparticles to form the nanoparticle suspension.

15. The system of claim 14, further comprising a post-processing apparatus (105) positioned between the wire explosion assembly and the bubbler system, wherein the post-processing apparatus is configured to introduce a second processing gas different than the first processing gas or is configured to process the nanoparticles, the process being at least one process selected from the group consisting of process of heating the nanoparticles, process of cooling the nanoparticles.

## Patentansprüche

1. Drahtexplosions-Anordnung (101), die so ausgeführt ist, dass sie Nanopartikel ausbildet, indem sie wenigstens ein Segment eines elektrisch leitenden Drahtes (115) zur Explosion bringt, wobei die Drahtexplosions-Anordnung umfasst:
eine Spule (114), die den elektrisch leitenden Draht trägt;
einen Behälter (107), der eine Drahtexplosions-Kammer (108) bildet;
eine Drahtklemm-Anordnung (109), die zum Abziehen des elektrisch leitenden Drahtes von der Spule und zum Ausüben einer konstanten Spannung auf das Segment des elektrisch leitenden Drahtes drehbar in der Drahtexplosions-Kammer aufgenommen ist;
eine Stromquelle (113) zum Zuführen eines elektrischen Stroms zu dem durch die Drahtklemm-Anordnung mit einer konstanten Spannung gespannten Segment des elektrisch leitenden Drahtes, wobei der elektrische Strom so ausgelegt ist, dass er das Segment des elektrisch leitenden Drahtes zu den Nanopartikeln explodieren lässt;
wobei die Drahtklemm-Anordnung des Weiteren umfasst:
ein Wickel-und-Spann-Element (129);
wenigstens eine erste Klemmen-Anordnung (130) und eine zweite Klemmen-Anordnung (131), die mit dem Wickel-und-Spann-Element gekoppelt sind; sowie
eine Drahtführung (132;135), die mit dem Wickel-und-Spann-Element zwischen der wenigstens ersten und zweiten Klemm-Anordnung gekoppelt ist, wobei die wenigstens erste und zweite Klemm-Anordnung jeweils so ausgeführt sind, dass sie sich zwischen einer festgeklemmten Position und einer gelösten Position bewegen,
wobei Drehung der Drahtklemm-Anordnung so ausgelegt ist, dass das Segment des elektrisch leitenden Drahtes in die Drahtexplosions-Kammer hinein gezogen wird und das Segment des elektrisch leitenden Drahtes um wenigstens einen Abschnitt des Wickel-und-Spann-Elementes gewickelt wird, um die Spannung auf das Segment des elektrisch leitenden Drahtes auszuüben, und
sich das Segment des elektrisch leitenden Drahtes zwischen der Drahtführung und einer der wenigstens ersten und zweiten Klemmen-Anordnung erstreckt, wenn sich die wenigstens erste und zweite Klemmen-Anordnung in der Klemmposition befinden.

2. Drahtexplosions-Anordnung nach Anspruch 1, die des Weiteren umfasst:
einen ersten elektrischen Draht (184), der mit der ersten Klemmen-Anordnung gekoppelt ist;
einen zweiten elektrischen Draht (185), der mit der zweiten Klemmen-Anordnung gekoppelt ist;
einen dritten elektrischen Draht (186), der mit der Drahtführung gekoppelt ist,
wobei die Stromquelle mit dem ersten und dem zweiten elektrischen Draht gekoppelt ist, und
die Stromquelle so ausgeführt ist, dass sie den Strom dem Segment des elektrisch leitenden Drahtes abwechselnd über die erste und die zweite Klemmen-Anordnung zuführt, um das Segment des elektrisch leitenden Drahtes zu den Nanopartikeln explodieren zu lassen.

3. Drahtexplosions-Anordnung nach Anspruch 2, wobei der erste und der zweite elektrische Draht jeweils eine erste Polarität haben und der dritte elektrische Draht eine zweite Polarität hat, die der ersten Polarität entgegengesetzt ist.

4. Drahtexplosions-Anordnung nach einem der Ansprüche 1 - 3, die des Weiteren einen Motor (163) umfasst, der mit der Drahtklemm-Anordnung gekoppelt ist, wobei der Motor so ausgeführt ist, dass er die Drahtklemm-Anordnung in der Drahtexplosions-Kammer dreht.

5. Drahtexplosions-Anordnung nach einem der Ansprüche 1 - 4, wobei:
der Behälter eine nach innen gerichtete Nockenfläche (161) mit wenigstens einer Erhebung umfasst; und
die erste sowie die zweite Klemmen-Anordnung des Weiteren jeweils eine Rolle (153) umfassen, die mit der Nockenfläche in Eingriff kommt, wobei der Eingriff zwischen den Rollen und der wenigstens einen Erhebung an der Nockenfläche des Behälters so ausgelegt ist, dass dadurch die erste und die zweite Klemmen-Anordnung abwechselnd in die gelöste Position bewegt werden.

6. Drahtexplosions-Anordnung nach Anspruch 5, die des Weiteren umfasst:
eine Einlassöffnung (124), die in dem Behälter ausgebildet ist, wobei die Einlassöffnung so ausgeführt ist, dass sie den elektrisch leitenden Draht aufnimmt, der sich in die Drahtexplosions-Kammer hinein erstreckt; und
eine Drahtzuleitungs-Führung (128), die in der Drahtexplosions-Kammer aufgenommen ist, wobei die Drahtzuleitungs-Führung zum Ausrichten des elektrisch leitenden Drahtes auf die Drahtklemm-Anordnung ausgeführt ist.

7. Drahtexplosions-Anordnung nach Anspruch 6, wobei die wenigstens eine Erhebung an der nach innen gerichteten Nockenfläche in der Nähe der Einlassöffnung und der Drahtzuleitungs-Führung positioniert ist, und bei der Drehung der Drahtklemm-Anordnung die erste und die zweite Klemmen-Anordnung vor Erreichen der Einlassöffnung mit der wenigstens einen Erhebung in Eingriff kommen.

8. Drahtexplosions-Anordnung nach einem der Ansprüche 1 - 7, wobei jede von der ersten und der zweiten Klemmen-Anordnung des Weiteren ein elastisches Element (159) umfasst, das zum Vorspannen einer entsprechenden von der ersten und der zweiten Klemmen-Anordnung in die Klemmposition ausgeführt ist.

9. Drahtexplosions-Anordnung nach einem der Ansprüche 1 - 8, wobei die Drahtführung eine erste Drahtführung (132) ist und die Drahtklemm-Anordnung des Weiteren eine zweite Drahtführung (135) umfasst, die mit dem Wickel-und-Spann-Element gekoppelt ist, wobei die zweite Drahtführung zwischen der ersten und der zweiten Klemmen-Anordnung und der ersten Drahtführung gegenüberliegend angeordnet ist.

10. Drahtexplosions-Anordnung nach einem der Ansprüche 1 - 9, wobei das Wickel-und-Spann-Element ein elektrisch nicht leitendes Material umfasst.

11. System, das zum Ausbilden einer Nanopartikel-Suspension ausgeführt ist, wobei das System umfasst:
die Drahtexplosions-Anordnung nach Anspruch 1, sowie
ein Gas-Strömungssystem (102), das zum Einleiten eines ersten Prozessgases in die Drahtexplosions-Kammer ausgeführt ist.

12. System nach Anspruch 11, wobei das erste Prozessgas aus der Gruppe von Gasen ausgewählt wird, die aus Sauerstoff, Stickstoff und Kombinationen daraus besteht.

13. System nach Anspruch 11 oder Anspruch 12, das des Weiteren eine Flüssigkeit in der Drahtexplosions-Kammer umfasst, und wobei die Drahtklemm-Anordnung zum Ziehen und Ausüben von Spannung auf das Segment des elektrisch leitenden Drahtes in die Flüssigkeit eingetaucht ist, so dass die Nanopartikel in der Flüssigkeit ausgebildet werden.

14. System nach einem der Ansprüche 11, 12 oder 13, das des Weiteren ein Bubbler-System (104) umfasst, das mit der Drahtexplosions-Anordnung gekoppelt und so ausgeführt ist, dass es den Nanopartikeln ein Lösungsmittel zuführt, um die Nanopartikel-Suspension auszubilden.

15. System nach Anspruch 14, das des Weiteren eine Nachverarbeitungs-Vorrichtung (105) umfasst, die zwischen der Drahtexplosions-Anordnung und dem Bubbler-System angeordnet ist, wobei die Nachverarbeitungs-Vorrichtung so ausgeführt ist, dass sie ein zweites Prozessgas einleitet, das sich von dem ersten Prozessgas unterscheidet, oder so ausgeführt ist, dass sie die Nanopartikel verarbeitet, wobei der Prozess wenigstens ein Prozess ist, der aus der Gruppe ausgewählt wird, die aus einem Prozess zum Erhitzen der Nanopartikel und einem Prozess zum Abkühlen der Nanopartikel besteht.

## Revendications

1. Assemblage d'explosion de fil (101) configuré pour former des nanoparticules en faisant exploser au moins un segment d'un fil électriquement conducteur (115), l'assemblage d'explosion de fil comprenant :
une bobine (114) soutenant le fil électriquement conducteur ;
une cuve (107) définissant une chambre d'explosion de fil (108) ;
un assemblage de serrage de fil (109) accueilli en rotation dans la chambre d'explosion de fil pour tracter le fil électriquement conducteur hors de la bobine et appliquer une tension constante sur le segment du fil électriquement conducteur ;
une source d'énergie (113) pour fournir un courant électrique au segment du fil électriquement conducteur mis en tension avec une tension constante par l'assemblage de serrage de fil, le courant électrique configuré pour faire exploser le segment du fil électriquement conducteur en les nanoparticules ;
dans lequel, l'assemblage de serrage de fil comprend en outre :
un élément de bobinage et de mise en tension (129) ;
au moins un premier assemblage de serrage (130) et un deuxième assemblage de serrage (131) couplés à l'élément de bobinage et de mise en tension ; et
un guide de fil (132 ; 135) couplé à l'élément de bobinage et de mise en tension entre les au moins premier et deuxième assemblages de serrage, les au moins premier et deuxième assemblages de serrage chacun configuré pour se déplacer entre une position serrée et une position désengagée,
dans lequel une rotation de l'assemblage de serrage de fil est configurée pour tracter le segment du fil électriquement conducteur dans la chambre d'explosion de fil et bobiner le segment du fil électriquement conducteur autour d'au moins une partie d'élément de bobinage et de mise en tension pour appliquer la tension au segment du fil électriquement conducteur, et
dans lequel, lorsque les au moins premier et deuxième assemblages de serrage sont dans la position serrée, le segment du fil électriquement conducteur s'étend entre le guide de fil et un des au moins premier et deuxième assemblages de serrage.

2. L'assemblage d'explosion de fil de la revendication 1, comprenant en outre :
un premier fil électrique (184) couplé au premier assemblage de serrage ;
un deuxième fil électrique (185) couplé au deuxième assemblage de serrage ; et
un troisième fil électrique (186) couplé au guide de fil,
dans lequel la source d'énergie est couplée aux premier et deuxième fils électriques, et
dans lequel la source d'énergie est configurée pour livrer alternativement le courant via les premier et deuxième assemblages de serrage au segment du fil électriquement conducteur pour faire exploser le segment du fil électriquement conducteur en les nanoparticules.

3. La chambre d'explosion de fil de la revendication 2, dans laquelle les premier et deuxième fils électriques présentent chacun une première polarité et le troisième fil électrique présente une deuxième polarité opposée à la première polarité.

4. L'assemblage d'explosion de fil de l'une quelconque des revendications 1 à 3, comprenant en outre un moteur (163) couplé à l'assemblage de serrage de fil, le moteur configuré pour faire tourner l'assemblage de serrage de fil dans la chambre d'explosion de fil.

5. L'assemblage d'explosion de fil de l'une quelconque des revendications 1 à 4, dans lequel :
la cuve comprend une surface de came tournée vers l'intérieur (161) présentant au moins un lobe ; et
les premier et deuxième assemblages de serrage comprennent chacun en outre un rouleau (153) entrant en contact avec la surface de came, le contact entre les rouleaux et l'au moins un lobe sur la surface de came de la cuve est configuré pour déplacer alternativement les premier et deuxième assemblages de serrage vers la position de désengagement.

6. L'assemblage d'explosion de fil de la revendication 5, comprenant en outre :
une ouverture d'admission (124) définie dans la cuve, l'ouverture d'admission configurée pour recevoir le fil électriquement conducteur s'étendant dans la chambre d'explosion de fil ; et
un guide d'alimentation en fil (128) accueilli dans la chambre d'explosion de fil, le guide d'alimentation en fil configuré pour aligner le fil électriquement conducteur sur l'assemblage de serrage de fil.

7. L'assemblage d'explosion de fil de la revendication 6, dans lequel l'au moins un lobe de la sur la surface de came tournée vers l'intérieur est positionnée à proximité de l'ouverture d'admission et du guide d'alimentation en fil, et dans lequel au cours de la rotation de l'assemblage de serrage de fil, les premier et deuxième assemblages de serrage entrent en contact avec l'au moins un lobe avant d'atteindre l'ouverture d'admission.

8. L'assemblage d'explosion de fil de l'une quelconque des revendications 1 à 7, dans lequel chacun des premier et deuxième assemblages de serrage comprend en outre un élément élastique (159) configuré pour incliner un respectif des premier et deuxième assemblages de serrage dans la position serrée.

9. L'assemblage d'explosion de fil de l'une quelconque des revendications 1 à 8, dans lequel le guide de fil est un premier guide de fil (132), et dans lequel l'assemblage de serrage de fil comprend en outre un deuxième guide de fil (135) couplé à l'élément de bobinage et de mise en tension, le deuxième guide de fil situé entre les premier et deuxième assemblages de serrage et opposé au premier guide de fil.

10. L'assemblage d'explosion de fil de l'une quelconque des revendications 1 à 9, dans lequel l'élément de bobinage et de mise en tension comprend un matériau électriquement non conducteur.

11. Système configuré pour former une suspension de nanoparticules, le système comprenant :
l'assemblage d'explosion de fil de la revendication 1 ; et
un système de flux de gaz (102) configuré pour introduire un premier gaz de traitement dans la chambre d'explosion de fil.

12. Le système de la revendication 11, dans lequel le premier gaz de traitement est sélectionné parmi le groupe de gaz constitué d'oxygène, d'azote et de combinaisons de ceux-ci.

13. Le système de la revendication 11 ou de la revendication 12, comprenant en outre un liquide dans la chambre d'explosion de fil, et dans lequel l'assemblage de serrage de fil pour tracter le segment du fil électriquement conducteur et lui appliquer une tension est submergé dans le liquide de sorte que les nanoparticules sont formées dans le liquide.

14. Le système de l'une quelconque des revendications 11, 12 ou 13, comprenant en outre un système de barboteur (104) couplé à l'assemblage d'explosion de fil et configuré pour introduire un solvant dans les nanoparticules pour former la suspension de nanoparticules.

15. Le système de la revendication 14, comprenant en outre un appareil de post-traitement (105) positionné entre l'assemblage d'explosion de fil et le système de barboteur, dans lequel l'appareil de post-traitement est configuré pour introduire un deuxième gaz de traitement différent du premier gaz de traitement ou est configuré pour traiter les nanoparticules, le processus consistant en au moins un processus sélectionné dans le groupe consistant en un processus de chauffage des nanoparticules, un processus de refroidissement des nanoparticules.
